# EUROPEAN PATENT APPLICATION

(11) **EP 3 563 686 A1**
(43) Date of publication of application: **06.11.2019**
(21) Application number: 17887695.9
(22) Date of filing: 12.12.2017
(51) Int. Cl.: A23B 7/16, A23B 7/144, A23L 3/34, B65D 81/28, B32B 27/18, B32B 27/08

(54) **BIOCIDAL PACKING SYSTEM**

(30) Priority: 30.12.2016 ES 201631717
(71) Applicant: Más Menargues, Jesús Manuel, 03690 San Vicente Del Raspeig (ES)
(72) Inventor: Más Menargues, Jesús Manuel, 03690 San Vicente Del Raspeig (ES)
(74) Representative: Ponti & Partners, S.L.P
(86) International application number: PCT/ES2017/070810
(87) International publication number: WO 2018/122426

(57) **Abstract**

The present invention relates to improvements in food packaging to retard unwanted biological growth in table grapes. A packaging film (A) is provided, comprising a composed polymeric layer (1), an adhesive layer (2), a powdered sodium metabisulfite layer (3) dispersed on the adhesive layer (2) and a micro-perforated polyethylene layer (4).

The packaging film (A) in accordance with the invention provides a greater biocidal effect.

The invention also relates to a bag (B) comprising the laminated packaging film (A) intended for enclosing table grapes in its interior.

## Description

The present invention relates to improvements in food packaging to retard unwanted biological growth, in particular to retard the growth of moulds or fungi in packaged fruit, especially table grapes.

### Background of the invention

Preservation materials based on the release of SO₂ have been used to preserve table grapes.

The usual presentation is a lamina composed of one or more layers, between which there is a fungicide.

Thus, Australian patent AU565243 discloses the incorporation of a fungicide in a polyethylene packaging film and heating of the film to release the fungicide.

It discloses the use of sodium metabisulfite as a fungicide that reacts with moisture to transform into SO₂ gas. Sulphur dioxide has the property of being an inhibitor of Botrystis Cinerea spore growth, which causes decay of table grapes.

American patent US3559562 discloses the packaging of table grapes in a waxed corrugated cardboard box having an inner plastic bag layer which releases sulphur dioxide. However, the speed of release of this fungicide is not properly controlled, especially if there are fluctuations in temperature during storage or transport. High levels of sulphur dioxide cause bleaching of the grapes, with the consequence that their sale price is lowered. Also, high levels of residual sulphur dioxide in grapes can cause health problems among a part of the population. An added difficulty is that of maintaining a substantially homogeneous release of sulphur dioxide inside the packaging with the aim of ensuring the homogeneous biocidal treatment of all the table grapes inside the packaging.

Different combinations of materials have been researched with the aim of ensuring a slow release of the fungicide. Thus, Spanish patent ES2289813 discloses a packaging film that controls the speed of release of the fungicide activated by water by controlling the proportions of polymers with high and low water transmission speeds. It describes different combinations of polymers selected based on the speed at which water or water vapour penetrates the polymer to come into contact with the sodium metabisulfite and the speed of transmission of sulphur dioxide through the polymer. In said patent, the amount of sodium metabisulfite in the polymer mixture must be sufficient to maintain a sustained release of sulphur dioxide for a period of up to eight weeks, i.e. 56 days. In said patent, the size of the sodium metabisulfite particle is not critical.

However, the satisfactory control of the release of the fungicide that enables homogeneous treatment inside the package while ensuring the removal of any residual sulphite and, especially, that makes it possible to extend the duration of the fungicide treatment inside the packaging in accordance with specific transport and/or storage needs of table grapes, has yet to be resolved.

### Description of the invention

The packaging method comprising a biocidal film of the invention solves the aforementioned drawbacks and has other advantages that will be described below.

In order to address the problems of the state of the art, the present invention provides a packaging film susceptible of enclosing a product subject to fungal attack comprising a composed polymeric layer, which includes at least a polymer with gas barrier properties, and it is characterised in that it further comprises:
- an adhesive layer;
- a layer of powdered sodium metabisulfite with different particle sizes dispersed on the adhesive layer; and
- a micro-perforated layer of high or low-density linear polyethylene.

Surprisingly, the use of powdered sodium metabisulfite in the form of a mixture of particles with different particle sizes provides a packaging film intended to enclose a product subject to fungal attack, such as table grapes, having a greater biocidal effect.

Advantageously, with the packaging film of the invention the duration of the fungicide treatment can be modulated in accordance with the specific needs of the product and/or product storage time and/or transport to its point of sale.

Additionally, the thickness of the micro-perforated polyethylene layer can be modified together with the particle size distribution of the powdered sodium metabisulfite to modulate the biocidal effect depending on whether more or less sulphur dioxide release concentration and/or more or less duration of the biocidal treatment is required.

Therefore, with the packaging film of the invention a packaging bag can be designed in accordance with the specific needs of each product, which represents savings in raw material and greater effectiveness of the treatment.

Advantageously, the packaging film of the invention has a double biocidal effect based on two SO₂ release phases of different concentration and duration. Thus, the packaging film provides a quick release that can extend for up to 36 hours and a subsequent slow release, which can extend for up to 120 days in accordance with the needs of the product.

Therefore, an initial sulphur dioxide release at a higher concentration is provided, which makes it possible to move the atmospheric air around the product and initiate the fungicide treatment practically from the beginning of the treatment and, next, a sulphur dioxide release at a lower concentration, by way of maintenance treatment, is provided, which makes it possible to keep the product protected from the fungal attack, in addition to extending the treatment period up to 120 days from the packaging date.

Preferably, the powdered sodium metabisulfite comprises a mixture of different particle sizes within the interval from 0.002 mm to 2 mm. A particle size in the lower range of the interval is selected to modulate the quick release of sulphur dioxide, around the product, within a sulphur dioxide concentration range comprised between 80 and 100 ppm, and a particle size within the upper range of the interval is selected to modulate the slow release of sulphur dioxide, around the product, within a sulphur dioxide concentration range comprised between 6 and 10 ppm.

In a preferred embodiment, the composed polymeric layer includes ethylene vinyl alcohol copolymer (EVOH), which endows the packaging film with magnificent barrier properties against oxygen and other gases. EVOH is a thermoplastic polymer widely used in the food packaging industry.

In one embodiment, the composed polymeric layer includes, in addition to EVOH, at least one layer of a polymer selected from high or low-density linear polyethylene, polypropylene, polyamide, nylon and similar.

In a preferred embodiment, the composed polymeric layer includes, in addition to an EVOH layer, a polypropylene layer, which endows the packaging film with greater thermal and impact resistance. The polypropylene can be in the form of a homopolymer and a copolymer.

In a preferred embodiment, the composed polymeric layer includes, in addition to an EVOH layer, a polypropylene layer and a polyethylene layer, which can be of different densities. Polyethylene has excellent barrier properties against gases, water vapour and aromas, and high resistance to greases, oils and chemical products.

In one embodiment, the sodium metabisulfite layer is powdered sodium metabisulfite with particles of different particle sizes dispersed on the adhesive layer, wherein the concentration of sodium metabisulfite is comprised between 5 and 50 g/m².

Preferably, the adhesive layer comprises a polyurethane-based adhesive. In one embodiment, the polyurethane-based adhesive comprises at least one component and may or may not also include a solvent.

Preferably, the thickness of the adhesive layer is determined by an amount of adhesive deposited within the range of 2 to 15 g/m².

Preferably, the micro-perforated polyethylene layer comprises micro-perforations homogeneously distributed of a size comprised between 0.001 and 1.5 mm.

In a second aspect, the invention relates to a bag made from the packaging film in accordance with the first aspect of the invention.

The bag in accordance with the second aspect is intended to contain grapes and is made of a laminated film comprising the packaging film in accordance with the first aspect of the invention. The bag is arranged in such a way that the inner layer that is in contact with the grapes is the micro-perforated polyethylene layer, and the outer layer of the bag is the composed polymeric layer.

### Brief description of the drawings

In order to better understand the description made, a set of drawings has been provided which, schematically and solely by way of non-limiting example, represent a practical case of embodiment.

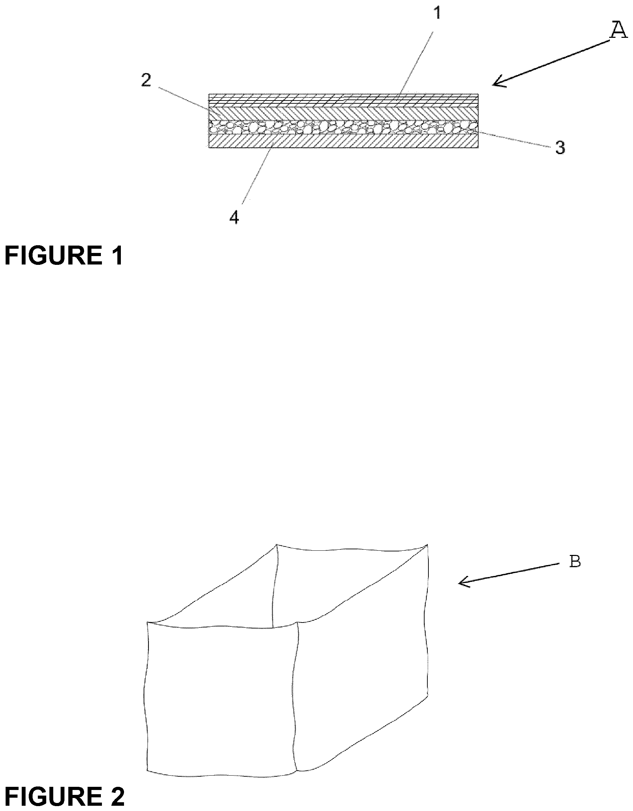

Figure 1 shows a sectional view of the packaging film A of the invention.
Figure 2 shows a perspective view of the bag B for containing table grapes made from a laminated film comprising the packaging film of the invention.

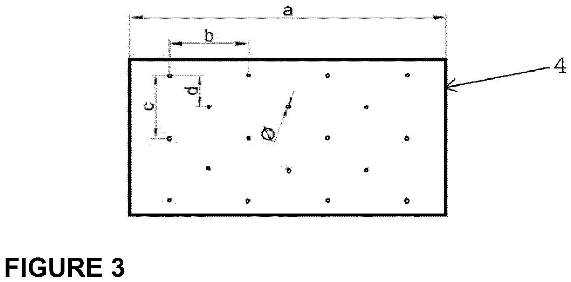

Figure 3 shows an embodiment of the polyethylene layer 4 having micro-perforations homogeneously distributed throughout the layer, wherein a= 100mm, b = 25mm, c = 25mm, d = 12.5mm and J = 1mm.

### Description of a preferred embodiment

### Example

The packaging film A comprises in the following order:
a composed polymeric layer 1, which includes PE, EVOH and PP;
an adhesive layer 2 having a base of polyurethane;
a powdered sodium metabisulfite 3 layer comprising a mixture of particles of different particle sizes comprised between 0.002 and 2 mm; and
a micro-perforated layer of low-density linear polyethylene 4, whose micro-perforations have a diameter size of 1 mm, as shown in Fig. 4.

The manufacturing process is through lamination of two laminae by adhesive, one not micro-perforated 1 and another micro-perforated 4. An adhesive layer 2 between 2 and 15 gr/m² is applied to the non-micro-perforated lamina 1 and is then sprinkled with, by gravity, with the sodium metabisulfite 3 of different particle sizes in amounts between 5 and 50 gr/m².

The online process and after adding the powder is completed with the micro-perforated lamina 4, thereby forming the laminated packaging film.

This is the basis of the lamina that will serve to make the bag B.

However, it must be noted that this lamina, in itself and cut into formats, already constitutes a biocidal generator.

The final thickness, upon laminating the packaging film, was 3 mm.

A bag B was, then, manufactured with this laminated packaging film to enclose table grapes in its interior.

Although reference has been made to a specific embodiment of the invention, it is evident to a person skilled in the art that the packaging film described is susceptible to numerous variations and modifications, and that all the aforementioned details can be replaced by other technically equivalent ones, without departing from the scope of protection defined by the attached claims.

## Claims

1. A packaging film (A) for enclosing a product subject to fungal attack, comprising a composed polymeric layer (1), which includes at least one polymer with gas barrier properties, **characterised in that** the packaging film further comprises:
- an adhesive layer (2);
- a layer of powdered sodium metabisulfite (3) with different particle sizes dispersed on the adhesive layer (2); and
- a micro-perforated layer of high or low-density linear polyethylene (4).

2. The packaging film (A) according to claim 1, **characterised in that** the at least one polymer with gas barrier properties is ethylene vinyl alcohol copolymer (EVOH).

3. The packaging film (A) according to claim 1, **characterised in that** the powdered metabisulfite (3) comprises a mixture of particles of particle sizes within the range of 0.002 mm to 2 mm.

4. The packaging film (A) according to claim 3, **characterised in that** the sodium metabisulfite is in a concentration comprised between 5 and 50 g/m².

5. The packaging film (A) according to claim 1, **characterised in that** the adhesive is a polyurethane-based adhesive.

6. The packaging film (A) according to claim 5, **characterised in that** the thickness of the adhesive layer (2) is determined by an amount of adhesive comprised within the range of 2 to 15 g/m².

7. The packaging film (A) according to claim 1, **characterised in that** the micro-perforated polyethylene layer (4) comprises homogeneously distributed micro-perforations having a size comprised between 0.001 and 1.5 mm.

8. The packaging film (A) according to any of the preceding claims, **characterised in that** a thickness of the micro-perforated polyethylene layer (4) and a mixture of particles of different particle sizes of sodium metabisulfite are selected to provide a film having a biocidal effect with two sulphur dioxide release speeds, a first quick release with a duration of up to 36 hours and a second and a subsequent slow release with a duration of up to 120 days.

9. The packaging film (A) according to claim 8, **characterised in that** particle sizes in the lower range is selected to provide, around the product, a quick sulphur dioxide release with a concentration comprised between 80 and 100 ppm, and particle sizes in the upper range is selected to provide, around the product, a slow sulphur dioxide release with a concentration comprised between 6 and 10 ppm.

10. A bag (B) made from a packaging film (A), **characterised in that** the packaging film is as claimed in any of claims 1 to 9.

11. A bag (B) for containing grapes, made from a laminated film comprising the packaging film, as claimed in any of claims 1 to 9, wherein the bag inner layer, which is in contact with the grapes is the micro-perforated polyethylene layer (4) and the bag outer layer is the composed polymeric layer (1).
